# EUROPÄISCHE PATENTSCHRIFT

(11) **EP 1 639 685 B1**
(45) Veröffentlichungstag und Bekanntmachung des Hinweises auf die Patenterteilung: **02.03.2011**
(21) Anmeldenummer: 04740489.2
(22) Anmeldetag: 30.06.2004
(51) Int. Cl.: H02K 3/12

(54) **WANDERFELDMASCHINE**
TRAVELLING FIELD MACHINE
MACHINE A CHAMP GLISSANT

(30) Priorität: 01.07.2003 DE 10329641
(43) Veröffentlichungstag der Anmeldung: 29.03.2006
(73) Patentinhaber: Compact Dynamics GmbH, 82319 Starnberg (DE)
(72) Erfinder: GRÜNDL, Andreas, 82319 Starnberg (DE); HOFFMANN, Bernhard, 82319 Starnberg (DE)
(74) Vertreter: Schmidt, Steffen J.
(86) Internationale Anmeldenummer: PCT/EP2004/007112
(87) Internationale Veröffentlichungsnummer: WO 2005/004308

(56) Entgegenhaltungen:
- EP-A- 1 039 616
- DE-C- 527 149
- GB-A- 217 320
- PATENT ABSTRACTS OF JAPAN Bd. 2002, Nr. 02, 2. April 2002 (2002-04-02) -& JP 2001 275288 A (MATSUSHITA ELECTRIC IND CO LTD), 5. Oktober 2001 (2001-10-05) in der Anmeldung erwähnt

## Beschreibung

### Bereich der Erfindung

Die vorliegende Erfindung betrifft eine Wanderfeldmaschine. Insbesondere betrifft die Erfindung eine Wanderfeldmaschine mit einem Ständer und einem Läufer, die jeweils wenigstens eine Ständerspule bzw. eine Läuferspule aufweisen, wobei der Ständer bzw. der Läufer einen weichmagnetischen Eisenkörper mit einem Ständer- bzw. Läuferrücken aufweist, an dem unter Bildung von Zähnen beabstandete Nuten ausgebildet sind.

### Begriffsdefinitionen

Unter dem Begriff "Wanderfeldmaschinen", also Asynchron-, Synchron-, Reluktanzmaschinen, permanent erregte elektrische Maschinen, etc. sind sowohl Motoren als auch Generatoren verstanden, wobei es insbesondere für die Erfindung unerheblich ist, ob eine solche Maschine als rund laufende Maschine oder zum Beispiel als Linearmotor ausgestaltet ist. Außerdem ist die Erfindung sowohl bei Innenläufermaschinen als auch bei Außenläufermaschinen einsetzbar.

### Hintergrund der Erfindung_

Bei der Verminderung des Bauraums hocheffizienter elektrischer Maschinen spielt die Bauform und Anordnung der Leiter der Feldwicklungen eine entscheidende Rolle. Möglichst kurze Leiterlängen in den Wicklungsköpfen bei einer hohen Raumausnutzung vermindern die ohmschen Verluste und erhöhen die Leistungsdichte.

Da die ohmschen Verluste in der Ansteuerungsschaltung und in der (Stator-)Wicklung dem zu schaltenden Strom proportional sind, muß eine gewisse Leiterlänge im Magnetfeld bereitgestellt werden, um bei einem möglichst niederohmigen Leiteraufbau eine der gewünschten hohen Ansteuerspannung entsprechende induzierte Gegenspannung zu erzeugen.

Konventionelle elektrische Maschinen werden überwiegend mit kontinuierlichen Drähten - meist mit rundem Querschnitt - gewickelt. Ein dünner, flexibler Draht lässt sich zwar einfach in die Nuten einlegen, ein Nachteil besteht jedoch in der geringen Raumausnutzung in den Nuten und Wicklungsköpfen. Drähte mit rundem Leiterquerschnitt können die Querschnittsfläche der Nut nicht vollständig ausnutzen. Der Raum in den Wicklungsköpfen kann dadurch ebenfalls nur unzureichend genutzt werden und die magnetisch nicht wirksame Leiterlänge, das Gesamtgewicht, der Raumbedarf und die ohmschen Verluste steigen an.

### Stand der Technik

Aus der EP 1 039 616 A2 (Honda Giken) ist eine Wanderfeldmaschine bekannt, deren Ständer eine Ständerspule trägt. Der Ständer hat einen weichmagnetischen Eisenkörper mit einem Ständerrücken an dem unter Bildung von Zähnen beabstandete Nuten ausgebildet sind. Die Ständerspulen haben jeweils einen in einer der Nuten angeordnete Leiterstab und an den Stirnseiten des Ständers angeordnete, die Leiterstäbe verbindende Stirnverbinder. Die Leiterstäbe haben alle die gleiche axiale Länge. Die Stirnverbinder der Ständerspulen sind in einer Lage an den Stirnflächen des Ständers quer zum Nutengrund angeordnet. Die Stirnverbinder sind als symmetrische Teile gestaltet und überragen den Nutengrund abwechselnd in Richtung des Ständerrückens und zum Luftspalt der Wanderfeldmaschine hin. Die Stirnverbinder und die Leiterstäbe sind miteinander vernietet.

Aus der JP 2001 275288 (Matsushita Electric Ind. Co. Ltd) ist eine Wanderfeldmaschine bekannt, deren Ständer einen Ständerrücken aufweist, an dem beabstandete Nuten ausgebildet sind. In den Nuten des Ständerrückens sind Leiterstäbe angeordnet und die überragenden Leiterabschnitte der Leiterstäbe sind mit geschichteten Stirnverbindern verbunden. Jede Phase hat eine verschiedene Leiterstabslänge, die einem bestimmten Stirnverbinder und bestimmten Leiterabschnitten in den Nuten entspricht. Dementsprechend haben die Leiterstäbe in einer Nut die gleiche Länge und jede Stirnverbinderplatte weist Leitungen auf, die die Leiterabschnitte jener Phase verbinden. Diese Leitungen müssen um die anderen benachbart angeordneten Leiterstäbe herumgeführt werden.

In der DE 527 149 aus dem Jahr 1931 sind bei einer elektrischen Maschine in den Nuten A¹ ... A⁶ die Leitungen E¹, F¹, G¹, ... E⁶, F⁶, G⁶, jeweils seitlich nebeneinander von den Leiterstäben B¹, C¹, D¹ ... B⁶, C⁶, D⁶ weggeführt. In dem Dokument ist an keiner Stelle erwähnt, dass die Leiterstäbe B¹, C¹, D¹ ... B⁶, C⁶, D⁶ eine unterschiedliche Länge haben sollen.

In der GB 217, 320 aus dem Jahr 1924 sind die in den Nuten befindlichen Leiter nicht nebeneinander, sondern konzentrisch ineinander angeordnet, wobei der innerste Leiter die höchste Spannung führt und gegen einen ihn umgebenden rohrförmigen Leiter durch eine rohrförmige Isolierung abgeschirmt ist. Auch dieser zweite rohrförmigen Leiter ist durch eine rohrförmige Isolierung gegen einen weiter ihn umgebenden rohrförmigen Leiter abgeschirmt. Des weiteren sind bei dieser Anordnung auch die Stirnverbinder konzentrisch ineinander angeordnet, wobei der innerste Leiter die höchste Spannung führt und gegen einen ihn umgebenden rohrförmigen Leiter durch eine rohrförmige Isolierung abgeschirmt ist. Auch dieser zweite rohrförmigen Leiter ist durch eine rohrförmige Isolierung gegen einen weiter ihn umgebenden rohrförmigen Leiter abgeschirmt.

### Der Erfindung zugrundeliegendes Problem

Den vorstehend erläuterten, bekannten Anordnungen haftet der Nachteil an, die Anforderungen an die Leistungsdichte und Zuverlässigkeit, wie sie in einigen Anwendungsbereichen gestellt werden, nur teilweise zu erfüllen.

Die Ausgestaltung der Spulenköpfe ist ein für den Wirkungsgrad der elektrischen Maschine wesentlicher Faktor, wobei die bekannten Ausgestaltungen hinsichtlich der Erfordernisse einer Massenfertigung nicht für hoch-effiziente Maschinen optimiert sind. Ausserdem erlaubt zum Beispiel das in der EP 1039 616 A2 beschriebene Kon-zept nicht den Einsatz mehrlagiger Wicklungen, da hierbei die Stirnverbinder miteinander kollidieren würden.

### Erfindungsgemäße Lösung

Als Lösung dieser Probleme lehrt die Erfindung eine Wanderfeldmaschine der oben genannten Art, mit einem Ständer und einem Läufer, die durch einen Luftspalt getrennt sind und die jeweils wenigstens eine Ständerspule bzw. eine Läuferspule aufweisen, wobei der Ständer bzw. der Läufer einen weichmagnetischen Eisenkörper mit einem Ständer- bzw. Läuferrücken aufweist, an dem unter Bildung von Zähnen beabstandete Nuten ausgebildet sind, und in jeder der Nuten mehrere Leiterstäbe der Ständerspule bzw. der Läuferspule in Reihe angeordnet sind und an den Stirnseiten des Ständers bzw. Läufers angeordnete, die Leiterstäbe verbindende, über wenigstens eine Nut reichende Stirnverbinder aufweisen, wobei in jeder der Nuten jeweils zueinander benachbart angeordnete Leiterstäbe unterschiedlich lange, die Stirnseiten des Ständers bzw. Läufers überragende Leiterabschnitte aufweisen, und die Stirnverbinder zumindest teilweise in axialer Richtung treppenartig in Richtung des Statorrückens oder des Luftspaltes der elektirschen Maschine geschichtet an den Stirnseiten des Ständers bzw. Läufers angeordnet sind.

Diese Ausgestaltung erlaubt eine maximale Ausnutzung des vorhandenen Raums (sowohl in axialer als auch in radialer bzw. seitlicher Richtung) bei gleichzeitiger Leistungsoptimierung der elektrischen Maschine mit sehr hoher Zuverlässigkeit im Betrieb bei geringen Herstellungskosten.

### Ausgestaltungen und Weiterbildungen der Erfindung

Bevorzugt sind die Stirnverbinder an ihren beiden Endbereichen mit Querabschnitten versehen, durch die sie mit den Enden der Leiterstäbe verbunden sind. Die Länge der Querabschnitte bestimmt dabei wie weit die Wicklungsköpfe ausgehend von den Leiterstäben über den Rücken des Läufers oder Ständers reichen.

Die Leiterstäbe können an ihren Enden jeweils einen Verbindungsbereich aufweisen, der mit entsprechenden Abschnitten an den Stirnverbindern für eine mechanische und elektrische Verbindung zusammenpaßt. Die Ausgestaltung der mechanischen und elektrischen Verbindung kann unterschiedlich sein. Zum Beispiel sind die Verbindungsbereiche an den Enden der Leiterstäbe bzw. der Querabschnitte der Stirnverbinder durch Ausnehmungen oder Verjüngungen gebildet, in bzw. an die die entsprechenden Abschnitte der Stirnverbinder bzw. der Leiterstäbe gefügt und durch Laser-Schweißen oder Elektro-Impuls-Schweißen kontaktiert sein.

Die Verbindung zwischen dem Endabschnitt des Leiterstabes und dem Endabschnitt des Stirnverbinders kann auch - unabhängig von der konstruktiven Gestaltung des Endabschnittes des Leiterstabes und dem Endabschnitt des Stirnverbinders eine Schicht aus Hartlot, vorzugsweise Silberhartlot, Zinnhartlot oder dergl. aufweisen, oder die Verbindung zwischen dem Endabschnitt des Leiterstabes und dem Endabschnitt des Stirnverbinders hat eine Schicht aus Hochtemperaturweichlot, vorzugsweise mit einem Schmelzpunkt von mindestens etwa 380 Grad Celsius.

Die Querabschnitte an den beiden Endbereichen der Stirnverbinder zu den jeweiligen Enden der Leiterstäbe können unterschiedlich lang und/oder mit unterschiedlichem Winkel abgewinkelt sein.

Je nach dem, ob es sich bei der elektrischen Maschine um einen Innenläufer oder einen Aussenläufer handelt, können die Nuten sich zu dem Luftspalt zwischen dem Ständer und dem Läufer hin verjüngen oder erweitern. Damit können die in den Nuten angeordneten Leiterstäbe abhängig von ihrer Position in der Nut eine an die Nutweite zumindest teilweise angepaßte Breite aufweisen. Dies bietet die maximale Ausnutzung des verfügbaren Nutraums.

Eine gute Raumausnutzung kann auch dadurch erreicht werden, daß zumindest auf einer der beiden Stirnseiten des Ständers die Stirnverbinder nicht nur in Richtung des Ständerrückens, sondern auch in Richtung des Luftspaltes zwischen dem Ständer und dem Läufer hin angeordnet sind. In diesem Fall steigt die Länge der Leiterstäbe sowohl vom Ständerrücken, als auch vom Luftspalt zwischen Ständer und Läufer her zur Mitte der Wicklungskammer hin an.

Vorzugsweise sind die Leiterstäbe und/oder die Stirnverbinder mit einem Keramik- oder Email-Überzug versehen. Dabei ist es vorteilhaft, die beiden Teile zu im wesentlichen L-förmigen Bauteilen zusammen zu fügen, vor dem Zusammenfügen oder daran anschließend mit dem Keramik- oder Email-Überzug zu versehen, sie dann lagenweise (von beiden Stirnseiten her) in die Nuten des weichmagnetischen Körpers einzubringen und dann zu den jeweiligen Wicklungen zu verbinden.

Weitere Merkmale, Eigenschaften, Vorteile und mögliche Abwandlungen werden für einen Fachmann anhand der nachstehenden Beschreibung deutlich, in der auf die beigefügte Zeichnung Bezug genommen ist.

In Fig. 1 ist eine schematische, perspektivische Explosionsansicht eines Ständers für eine elektrische Maschine gemäß der Erfindung veranschaulicht.

In Fig. 2 ist der Aufbau einer Wicklung einer elektrischen Maschine gemäß Fig. 1 schematisch veranschaulicht.

In Fig. 3a, 3b sind die Stirnverbinder der elektrischen Maschine gemäß Fig. 1 in einer vergrößerten Darstellung veranschaulicht.

### Detaillierte Beschreibung bevorzugter Ausführungsformen

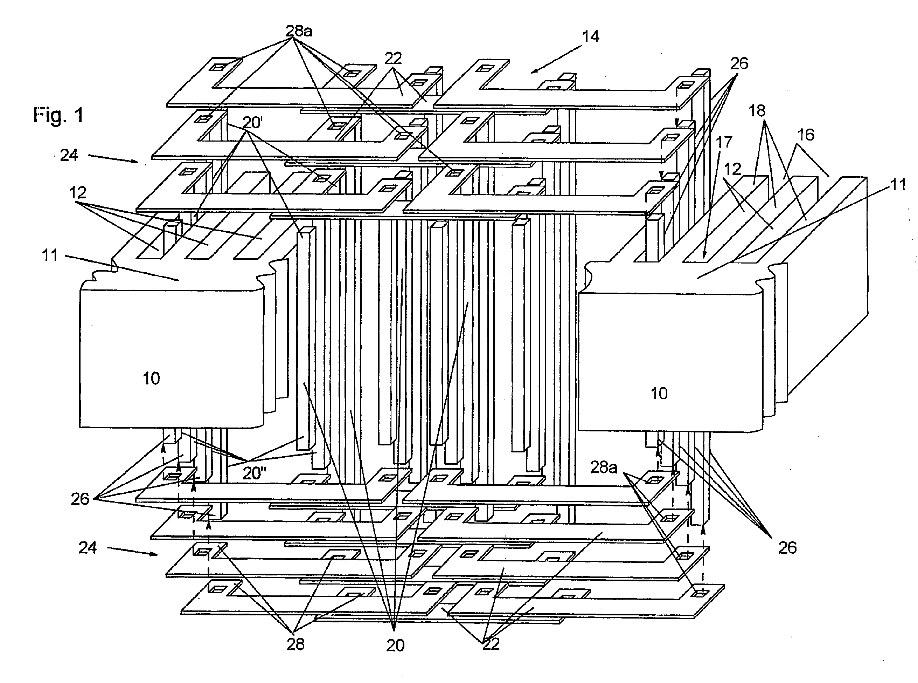

In Fig. 1 sind zwei unterbrochene Abschnitte einer Abwicklung eines Ständers 10 einer (nicht weiter veranschaulichten) Innenläufermaschine in einer Draufsicht gezeigt, wobei die Erfindung auch für eine Außenläufermaschine einsetzbar ist. Der Ständer 10 ist in der vorliegenden Ausführungsform aus (nicht weiter veranschaulichten) übereinandergestapelten Blechen aufgebaut, könnte aber auch aus zu der entsprechenden Form gepreßten und gesinterten Eisenpartikeln bestehen.

Der Ständer 10 mit einem Ständerrücken 11 hat nebeneinander angeordnete Nuten 12, durch die Wicklungskammern für die entsprechenden Ständerspulenwicklungen 14 gebildet sind. In der gezeigten Ausführungsform haben die Wicklungskammern 12 einen im wesentlichen rechteckigen Querschnitt, wobei sie an ihrer dem (nicht gezeigten) Läufer zugewandten Seite Schlitze 16 haben. Jeweils zwischen zwei Schlitzen 16 ist damit ein Zahn 18 gebildet.

Jede Ständerspule 14 ist aus im Querschnitt im wesentlichen rechteckigen Leiterstäben 20 gebildet, welche in die Wicklungskammern 12 eingebracht sind und mit Stirnverbindern 22 verbunden sind. Die Stirnverbinder 22 aller Wicklungen bilden zusammen Wicklungsköpfe 24 an beiden Stirnflächen des Ständers 10. Der besseren Übersicht wegen sind einige der Ständerspulen 14 weggelassen und auch der Ständer 10 in zwei Abschnitten mit einer Unterbrechung dargestellt.

Die Stirnverbinder 22 sind im wesentlichen quer zum Grund 17 der Nuten 16 - bezogen auf die Längsachse der Leiterstäbe 20 - orientiert und überragen den Grund 17 der Nuten 16 teilweise in Richtung des Ständerrückens 11. Dabei haben die Stirnverbinder 22 relativ zur Stirnfläche des Ständers 10 bzw. Läufers eine im wesentlichen parallele Orientierung.

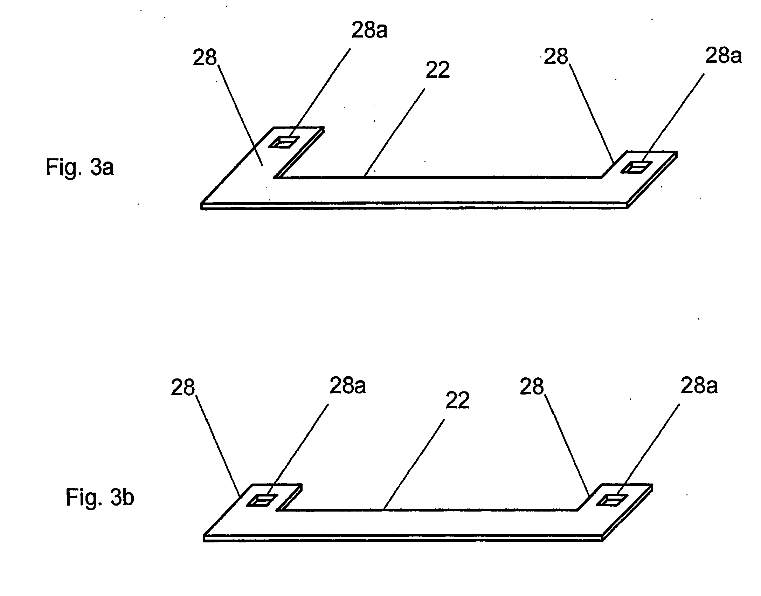

Die Stirnverbinder 22 sind an einem oder an beiden ihrer Endbereiche mit den Enden 26 der Leiterstäbe 20 durch quer zur Längsachse der Leiterstäbe 20 orientierte Querabschnitte 28 verbunden (siehe auch Fig. 3a und 3b). Die Querabschnitte können entweder - wie in der Fig. 1 gezeigt - Teil des Stirnverbinders 22, oder Teil des jeweiligen Leiterstabes 20 sein.

Wie insbesondere in Fig. 1 und 3a zu sehen ist, sind die Querabschnitte 28 an den beiden Endbereichen der Stirnverbinder 22 zu den jeweiligen Enden 26 der Leiterstäbe 20 unterschiedlich lang um die jeweilige Relativ-Position des Stirnverbinders 22 im Wickelkopf 24 zu erreichen. Die Querabschnitte 28 haben jeweils eine rechteckige Ausnehmung 28a, in die die Enden 26 der Leiterstäbe 20 eingeführt und elektrisch und mechanisch, zum Beispiel durch Laserschweißen verbunden sind.

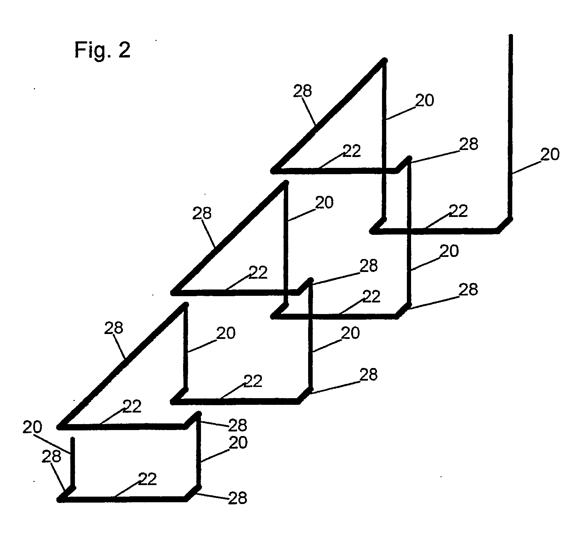

In Fig. 2 ist schematisch gezeigt, wie die Leiterstäbe 20 durch die Stirnverbinder 22 mit ihren an einem Ende der Leiterstäbe 20 unterschiedlich langen Querabschnitte 28 zu einer Ständerspulen 14 zusammengefügt werden.

In Fig. 3a ist einer der in Fig. 1 am oberen Ende der Leiterstäbe 20 angeordneten Stirnverbinder 22 mit unterschiedlich langen Querabschnitten 28 veranschaulicht.

In Fig. 3b ist einer der in Fig. 1 am unteren Ende der Leiterstäbe 20 angeordneten Stirnverbinder 22 mit gleichlangen Querabschnitten 28 veranschaulicht.

Die Stirnverbinder 22 reichen - abhängig von der Phasenzahl und der Lochzahl der elektrischen Maschine - über mehrere Nuten 16. Jeweils in einer Nut zueinander benachbart angeordnete Leiterstäbe 20 haben unterschiedlich lange, die Stirnseiten des Ständers 10 bzw. Läufers überragende Leiterabschnitte 20', 20 ". In der in Fig. 1 gezeigten Ausführungsform nimmt die Länge der Leiterabschnitte 20', 20 " vom Ständerrücken 11 zum freien Ende der Zähne 18 (mit anderen Worten zum Luftspalt der elektrischen Maschine) hin zu. In entsprechender Weise sind die Stirnverbinder 22 vom Ständerrücken 11 ausgehend zu den Zähnen 18 hin anwachsend treppenartig übereinander geschichtet an den Stirnseiten des Ständers 10 angeordnet.

Wie in Fig. 1 ebenfalls gezeigt überlappen sich Stirnverbinder einer Wicklung mit Stirnverbindern einer weiteren Wicklung auch in seitlicher Richtung (in Fig. 1 zum Beispiel von Links nach Rechts). Dabei bilden die Stirnverbinder 22 mit den beiden kürzesten Leiterstäbe 20n (in Fig. 1 vorne) einer Wicklung 14 jeweils die unterste Lage, die von den Stirnverbindern der nachvolgenden, zweitkürzesten Leiterstäbe 20 dieser Wicklung 14 treppenartig (in Fig. 1 nach hinten) überlagert wird. Dieser Aufbau wiederholt sich bis zu den längsten Leiterstäben 20 (in Fig. 1 ganz hinten) dieser Wicklung 14. Zwischen die Stirnverbinder 22 einer Wicklung 14 ragen seitlich abgestuft die Stirnverbinder 22 weiterer Wicklungen 14 hinein.

Die Erfindung hat damit durch die in ihrer Länge stufenförmig anwachsenden Leiterstäbe in jeder Nut und die einander sowohl in Längsrichtung der Nuten treppenartig übergreifenden Stirnverbinder einer Wicklung als auch die einander in Richtung quer zu den Nuten schuppenartig durchdringenden Stirnverbinder benachbarten Wicklungen eine sehr kompakte und raumsparende Anordnung der Wickelköpfe der elektrischen Maschine.

Die in den Fig. gezeigten Verhältnisse der einzelnen Teile und Abschnitte hiervon zueinander und deren Materialdicken sind nicht einschränkend zu verstehen. Vielmehr können einzelne Abmessungen auch von den gezeigten abweichen. Außerdem versteht es sich, daß die in den Fig. gezeigten Ausführungsformen für rund laufende Maschinen, also Innen- oder Außenläufermaschinen, entsprechend um eine Rotationsachse anzuordnen bzw. zu krümmen sind.

## Patentansprüche

1. Wanderfeldmaschine mit einem Ständer (10) und einem Läufer, die durch einen Luftspalt getrennt sind und jeweils wenigstens eine Ständerspule (14) bzw. eine Läuferspule aufweisen, wobei
- der Ständer (10) bzw. der Läufer einen weichmagnetischen Eisenkörper mit einem Ständer- (11) bzw. Läuferrücken aufweist, an dem unter Bildung von Zähnen (18) beabstandete Nuten (16) ausgebildet sind, und
- in jeder der Nuten (16) mehrere Leiterstäbe (20) der Ständerspule (14) bzw. der Läuferspule in Reihe angeordnet sind und an den Stirnseiten des Ständers (10) bzw. Läufers angeordnete, die Leiterstäbe (20) verbindende, über mehrere Nuten (16) reichende Stirnverbinder (22) aufweisen, **dadurch gekennzeichnet, dass**
- in jeder der Nuten (16) jeweils zueinander benachbart angeordnete Leiterstäbe (20) unterschiedlich lange, die Stirnseiten des Ständers (10) bzw. Läufers überragende Leiterabschnitte (20', 20") aufweisen, und
- die Stirnverbinder (22) zumindest teilweise in axialer Richtung treppenartig geschichtet an den Stirnseiten des Ständers (10) bzw. Läufers angeordnet sind.

2. Wanderfeldmaschine nach Anspruch 1, wobei
- die Stirnverbinder (22) an ihren beiden Endbereichen mit den Enden (26) der Leiterstäbe (20) durch Querabschnitte (28) verbunden sind.

3. Wanderfeldmaschine nach Anspruch 2, wobei
- die Querabschnitte (28) an den beiden Endbereichen der Stirnverbinder (22) zu den jeweiligen Enden (26) der Leiterstäbe (20) unterschiedlich lang und/oder mit unterschiedlichem Winkel abgewinkelt sind.

4. Wanderfeldmaschine nach Anspruch 1, wobei
- die Leiterstäbe (20) an ihren Enden jeweils einen Verbindungsbereich aufweisen, der mit entsprechenden Abschnitten an den Stirnverbindern (22) für eine mechanische und elektrische Verbindung zusammenpaßt.

5. Wanderfeldmaschine nach Anspruch 4, wobei
- die Verbindungsbereiche an den Enden der Leiterstäbe (20) mit entsprechend geformten Ausnehmungen (28a) der Querabschnitte (28) gefügt und/oder verschweißt, oder verlötet sind.

6. Wanderfeldmaschine nach Anspruch 5, wobei
- die Endabschnitte der Stirnverbinder mit den Endabschnitten des Leiterstabes durch Laserschweissen materialschlüssig verbunden sind.

7. Wanderfeldmaschine nach Anspruch 1, wobei
- die Nuten sich zu einem Luftspalt zwischen dem Ständer und dem Läufer hin verjüngen oder erweitern und
- die in den Nuten angeordneten Leiterstäbe abhängig von ihrer Position in der Nut eine an die Nutweite zumindest teilweise angepaßte Breite aufweisen.

8. Wanderfeldmaschine nach Anspruch 1, wobei
- zumindest auf einer der beiden Stirnseiten des Ständers die Stirnverbinder in Richtung des Ständerrückens und in Richtung des Luftspaltes zwischen dem Ständer und dem Läufer hin angeordnet sind, wobei
- die Länge der Leiterstäbe sowohl vom Ständerrücken, als auch vom Luftspalt zwischen Ständer und Läufer her zur Mitte der Nuten hin ansteigt.

## Claims

1. A travelling field machine with a stator (10) and a rotor which are separated by an air gap and each of which comprises at least one stator coil (14) or one rotor coil, respectively, wherein
- the stator (10) or the rotor, respectively, comprising a soft magnetic iron body with a stator back (11) or a rotor back, respectively, in which spaced grooves (16) are formed, generating teeth (18), and
- in each of the grooves (16) several conductor bars (20) of the stator coil (14) or the rotor coil, respectively, are arranged in series comprising end connectors (22) arranged at the faces of the stator (10) or the rotor, respectively, which connect the conductor bars (20) extending across several grooves (16),
**characterized in that**
- the conductor bars (20) are arranged in a neighbouring relationship in each of the grooves (16), comprising conductor portions (20', 20") of different length projecting beyond the faces of the stator (10) or rotor, respectively, and
- the end connectors (22) are at least partially arranged layered in tiers in the axial direction at the faces of the stator (10) or the rotor, respectively.

2. The travelling field machine according to Claim 1, wherein
- the end connectors (22) are joined at both of their end portions with the ends (26) of the conductor bars (20) by means of transverse portions (28).

3. The travelling field machine according to Claim 2, wherein
- the transverse portions (28) at the two end portions of the end connectors (22) to the respective ends (26) of the conductor bars (20) are of different lengths and/or are angled under different angles.

4. The travelling field machine according to Claim 1, wherein
- the conductor bars (20) have a connecting area each at their ends, which matches with corresponding portions at the end connectors (22) for a mechanical and electrical connection.

5. The travelling field machine according to Claim 4, wherein
- the connecting areas at the ends of the conductor bars (20) are joined and/or welded or brazed with correspondingly shaped recesses (28a) of the transverse portions (28).

6. The travelling field machine according to Claim 5, wherein
- the end portions of the end connectors are integrally joined with the end portions of the conductor bar by laser welding.

7. The travelling field machine according to Claim 1, wherein
- the grooves taper or expand towards an air gap between the stator and the rotor, and
- the conductor bars arranged in the grooves, depending on their position in the groove comprise a width which is at least partially adapted to the groove width.

8. The travelling field machine according to Claim 1, wherein
- at least at one of the two faces of the stator the end connectors are arranged in the direction of the stator back and in the direction of the air gap between the stator and the rotor, wherein
- the length of the conductor bars is increasing both from the stator back and the air gap between stator and rotor towards the centre of the grooves.

## Revendications

1. Machine à champ glissant comprenant un stator (10) et un induit qui sont séparés par un entrefer et possèdent respectivement au moins une bobine de stator (14) et une bobine d'induit,
- le stator (10) ou l'induit présentant un corps en fer magnétique doux muni d'un dos de stator (11) ou d'un dos d'induit sur lequel sont réalisées des rainures situées à une certaine distance les unes des autres et formant des dents (18), et
- plusieurs barrettes conductrices (20) de la bobine de stator (14) ou de la bobine de l'induit étant disposées en rang dans chacune des rainures (16) et présentant des éléments de liaison frontaux (22) qui, disposés sur les côtés frontaux du stator (10) ou de l'induit, couvrent plusieurs rainures (16) et relient entre elles les barrettes conductrices (20), **caractérisée en ce que**
- des barrettes conductrices (20) disposées de manière contiguë les unes par rapport aux autres dans chacune des rainures présentent des segments conducteurs (20', 20") de longueur différente qui font saillie des côtés frontaux du stator (10) ou de l'induit, et
- les éléments de liaison frontaux (22) sont disposés en couches sur les côtés frontaux du stator (10) ou de l'induit de manière à former des gradins pour le moins partiellement dans le sens axial.

2. Machine à champ glissant selon la revendication 1,
- les éléments de liaison frontaux (22) étant, à leurs parties terminales, reliés aux extrémités (26) des barrettes conductrices (20) par des segments transversaux (28).

3. Machine à champ glissant selon la revendication 2,
- les segments transversaux (28) étant, aux deux parties terminales des éléments de liaison frontaux (22), différemment longs et/ou pliés selon un angle différent vers les extrémités (26) respectives des barrettes conductrices (20).

4. Machine à champ glissant selon la revendication 1,
- les barrettes conductrices (20) présentant à chacune de leurs extrémités une zone de liaison adaptée aux segments correspondants sur les éléments de liaison frontaux (22) en vue d'une liaison mécanique et électrique.

5. Machine à champ glissant selon la revendication 4,
- les zones de liaison aux extrémités des barrettes conductrices (20) étant assemblées et/ou soudées ou brasées avec des évidements (28a) formés en conséquence dans les segments transversaux (28).

6. Machine à champ glissant selon la revendication 5,
- les segments terminaux des éléments de liaison frontaux étant reliés aux segments terminaux de la barrette conductrice par liaison de matière réalisée par soudage au laser.

7. Machine à champ glissant selon la revendication 1,
- les rainures allant en se rétrécissant ou en s'élargissant vers un entrefer entre le stator et l'induit et
- les barrettes conductrices disposées dans les rainures présentant, en fonction de leur position dans la rainure, une largeur au moins partiellement adaptée à la largeur de la rainure.

8. Machine à champ glissant selon la revendication 1,
- les éléments de liaison frontaux étant, au moins sur un des deux côtés frontaux du stator, disposés en direction du dos du stator et en direction de l'entrefer entre le stator et l'induit,
- la longueur des barrettes conductrices augmentant aussi bien à partir du dos du stator qu'à partir de l'entrefer entre le stator et l'induit, vers le milieu des rainures.
